# EUROPÄISCHE PATENTSCHRIFT

(11) **EP 2 908 097 B1**
(45) Veröffentlichungstag und Bekanntmachung des Hinweises auf die Patenterteilung: **16.11.2016**
(21) Anmeldenummer: 14000520.8
(22) Anmeldetag: 13.02.2014
(51) Int. Cl.: G01D 5/20

(54) **Reluktanz-Kettensensor sowie Verfahren zur Messung der Kettenlängung**
Reluctance chain sensor and method for measuring chain elongation
Capteur à réluctance pour chaîne et procédé de mesure d'étirement de chaîne

(43) Veröffentlichungstag der Anmeldung: 19.08.2015
(73) Patentinhaber: IWIS Antriebssysteme GmbH & Co. KG, 81369 München (DE)
(72) Erfinder: Siraky, Josef, 78166 Donaueschingen (DE); Kreisfeld, Peter, 90610 Winkelhaid (DE); Madlener, Florian, 82256 Fürstenfeldbruck (DE)
(74) Vertreter: Grünecker Patent- und Rechtsanwälte PartG mbB

(56) Entgegenhaltungen:
- WO-A1-2013/113764
- DE-A1- 2 709 233
- DE-C1- 4 339 595

## Beschreibung

Die vorliegende Erfindung bezieht sich auf einen Kettensensor mit mindestens einer Spule sowie auf eine Vorrichtung zur Messung der Kettenlängung mit zwei Kettensensoren und einer Steuereinheit. Des Weiteren bezieht sich die Erfindung auf ein Verfahren zur Messung der Kettenlängung einer Kette mit zwei Kettensensoren, die in einem Abstand zueinander entlang der Kette angeordnet sind.

Kettenantriebe, insbesondere auf Basis von Rollenketten, werden in industriellen Anwendungen zu Antriebs- und Transportzwecken eingesetzt, wobei in verschiedenen Einsatzgebieten oftmals mehrere Kettenstränge verwendet werden. Eine Kettenantriebseinheit umfasst üblicherweise eine endlos umlaufende Kette, die über mehrere entfernt voneinander angeordnete Kettenräder umgelenkt wird, und eine Vielzahl von mittels der Kette aktuierten oder mit der Kette verbundenen Antriebs- oder Transportelemente. Antriebsketten unterliegen im Betrieb einem Verschleiß durch die Relativbewegung der Einzelteile im Kettengelenk sowie weiteren unterschiedlichen Kettenlängungs-Faktoren, wie beispielsweise Einlauflängung, Reckung, Lagerspiel und Lagerabrieb. Diese Verschleiß- und Längungsfaktoren resultieren in einer Längung der Kette und führen schließlich zu einem Ausfall der Antriebseinheit. Der Verschleiß einer Kette ist weiter auch abhängig von der Antriebseinheit, in der sie eingesetzt wird, von den Lasten, denen sie ausgesetzt wird, und von der Umgebung, in der sie betrieben wird. Entsprechend kann der Verschleiß der Kette und damit auch der Ausfall der Antriebseinheit nicht mit Sicherheit vorhergesagt werden.

Im Rahmen der modernen Fabrikautomation werden Maschinen und Anlagen zunehmend vollautomatisiert ausgeführt, weshalb in einem ansteigenden Umfang komplexe Kettenantriebe eingesetzt werden. Die hohen Investitionskosten solcher vollautomatisierter Maschinen und Anlagen erfordert deren ständigen Einsatz mit möglichst wenigen ungewollten Stillstandszeiten. Solche ungewollten Stillstandszeiten führen nicht nur zu unmittelbaren finanziellen Verlusten, sondern auch zu mittelbaren Problemen, wie z.B. das Unterbrechen der Logistikkette bis hin zu nicht einhaltbaren Lieferzeiten, und so zu weiteren finanziellen Einbußen. Ein Verzicht auf verschleißempfindliche Kettenantriebe ist jedoch in absehbarer Zeit nicht möglich, da sie zum Antrieb solcher industrieller Anlagen und zum Transport von Produkten ohne Alternative sind.

Bereits ein geringer Verschleiß der Antriebsketten in automatisierten Maschinen und industriellen Anlagen führt weiter auch dazu, dass die mit der Kettenstellung synchronisierten Abläufe manuell nachgestellt werden müssen. Des Weiteren führt eine Längung der Antriebskette zu einer Erhöhung der Antriebsgeschwindigkeit, die bei automatisierten Anlagen konstant gehalten werden muss, insbesondere bei interaktiven Anlagensystemen.

Da weder ein Verzicht auf Antriebsketten möglich ist noch der Verschleiß und die Kettenlängung einer Antriebskette vermeidbar oder genau zu bestimmen sind, ist es notwendig, den Zustand der Antriebskette regelmäßig zu überwachen, um ein geplantes Nachstellen der synchronisierten Abläufe zu ermöglichen sowie frühzeitig Inspektionen und Ersatz einer verschlissenen Antriebskette planen und durchführen zu können.

Ein geeignetes Verfahren zum Überwachen der Längendehnung einer umlaufenden Antriebskette ist aus der US 5,291,131 bekannt. An der Antriebskette sind hier zwei in Längsrichtung der Kette beabstandete Markierungen vorgesehen, deren Position im Betrieb von zwei induktiven oder optischen Sensoren, die ebenfalls in einem Abstand zueinander angeordnet sind, erfasst wird. Über eine angeschlossene Datenerfassung können aus den Messwerten der beiden Sensoren die Umlaufgeschwindigkeit der Kette sowie die Kettenlängung bestimmt werden. Die Druckschrift EP 1 464 919 A1 beschreibt ein ähnliches Verfahren zum Überwachen des Verschleißes einer Antriebskette. Dazu sind auf gegenüberliegenden Seiten der Kette zwei Markierungen aus einem magnetischen Material vorgesehen, die beim Passieren von zwei induktiven Sensoren ein elektrisches Signal erzeugen. Die Sensoren sind dabei in einem Abstand zueinander auf gegenüberliegenden Seiten der Antriebskette angeordnet, dass zunächst ein gleichzeitiges Auslösen der Sensoren erreicht wird. Sobald sich durch die Verschleißlängung der Kette eine Zeitverzögerung zwischen dem Auslösen der Sensoren ergibt, kann über eine Positionsverschiebung der Sensoren die Verschleißlängung der Kette bestimmt werden. Eine weitere Vorrichtung zur Messung der Verschleißlängung einer Antriebskette mittels zweier optischer Sensoren wird in der US 7,540,374 B2 beschrieben. Dabei erfasst der erste Sensor das erste Kettengelenk eines Kettenglieds und ein zweiter Sensor bestimmt die Position und den Abstand des zweiten Kettengelenks. Des Weiteren kann auch der Abstand mehrerer Kettenglieder an zwei voneinander beabstandeten Messpositionen bestimmt werden.

Darüber hinaus ist es bekannt, den Verschleiß einer Antriebskette über die Messung der Kraft, des Weges oder des Drehwinkels von Kettenspannern oder zweier Drehwinkelsensoren am Antriebsrad und am Lastrad vorzunehmen. Voraussetzung dazu ist jedoch zum einen, dass überhaupt ein Kettenspanner gebraucht wird oder Drehwinkelsensoren einsetzbar sind, und zum anderen, dass diese dann durch den Verschleiß bzw. die Kettenlängung beeinflusst werden. Außerdem ist in beiden Fällen die Messung von der Gesamtkettenlänge abhängig, da bei einer längeren Kette der Weg und der Kraftverlauf absolut größer sind. Entsprechend müssen derartige Verfahren auf die jeweilige Anwendung hin sowie hinsichtlich der Auswirkung der Messergebnisse berechnet und eingestellt werden, weshalb diese Verfahren nicht generisch anwendbar sind. Außerdem wird bei beiden Verfahren nicht nur die direkte verschleißbedingte Kettenlängung, sondern gleichzeitig auch der Verschleiß der Kettenräder gemessen.

Bei diesen aus dem Stand der Technik bekannten Vorrichtungen und Verfahren gibt es je nach verwendeten Sensoren und Messprinzip eine Reihe unterschiedlicher Nachteile. Herkömmliche Messsysteme mit festen Abständen zwischen Sensoren erfordern für eine genaue Messung der Kettenlängung einen Antrieb mit einer konstanten Drehzahl und reagieren mit Messfehlern auf Unregelmäßigkeiten im Antriebssystem, beispielsweise einem relativen Schlupf zwischen Antriebsrad und Antriebskette.. Weiter sind optische Sensoren in vielen Anwendungsfällen für den praktischen Einsatz in Antriebs- und Transportsystemen nicht geeignet, da die industriellen Umgebungsbedingungen einen Ausfall oder Fehlmessungen der optischen Sensoren durch Staub und Schmutz fördern. Induktive Sensoren haben neben einer Schaltempfindlichkeit in Messrichtung auch senkrecht dazu eine inhärente Schaltempfindlichkeit, so dass induktive Sensoren neben einer Schwingungsempfindlichkeit auch zu Fehlmessungen neigen.

Es ist daher die Aufgabe der vorliegenden Erfindung, die Nachteile der im Stand der Technik bekannten Vorrichtungen und Verfahren zur Überwachung einer verschleißbedingten Kettenlängung zu beseitigen oder zu verringern, und dazu einen geeigneten Sensor und eine Messvorrichtung sowie ein verbessertes Verfahren zur Messung der Kettenlängung einer Antriebskette bereitzustellen.

Bei einem erfindungsgemäßen Sensor ist mindestens ein erster Reluktanzsensor vorgesehen, wobei der Reluktanzsensor einen magnetisch leitfähigen Jochkörper mit einem Mittelschenkel und zwei sich seitlich dazu erstreckenden Jochschenkeln aufweist, die mindestens eine induktive Spule ist auf dem Mittelschenkel angeordnet, jeder Jochschenkel ist mit zwei Zähnen versehen, wobei die Zähne der Jochschenkel im geringen Abstand zu einer Kette anordbar sind, und mit mindestens zwei Dauermagneten, die auf verschiedenen Seiten der mindestens einen Spule angeordnet sind. Die Anordnung des Reluktanzsensors mit relativ geringem Abstand an einer Seite einer Kette, wobei der Jochkörper parallel zu den Kettenlaschen der Kette angeordnet sein kann und die Vorsprünge oder Zähne der sich seitlich erstreckenden Jochschenkeln bevorzugt bis zwischen die Kettenlaschen reichen, ermöglicht die Ausbildung von geschlossenen magnetischen Kreisen über den Reluktanzsensor und die Kette hinweg mit einer relativ geringen Reluktanz, d. h. einem geringen magnetischen Widerstand.

Zur Verbesserung der magnetischen Leitfähigkeit des Reluktanzsensors können die weitgehend halbmondförmig ausgeformten Jochkörper für das Magnetfeld der sich ausbildenden magnetischen Kreise gut durchlässig sein, beispielsweise aus einem weichmagnetischem Eisenkern mit geringem magnetischen Widerstand, bzw. mit minimaler Reluktanz. Die über die Dauermagneten auf den seitlichen Jochschenkeln induzierten magnetischen Kreise erzeugen an der Spule auf dem Mittelschenkel eines Jochkörpers eine Spannung, wobei jeweils nur einer der geschlossenen magnetischen Kreise im Wesentlichen über die Spule geführt wird und der andere geschlossene magnetische Kreis jenseits der Spule im Kurzschluss über die Zähne des zugehörigen Jochschenkels und die Kette geschlossen ist.

Insbesondere ist der Sensor ein Kettensensor zur Messung der relativen Längung und/oder der Geschwindigkeit der Kette.

Bei einer Bewegung der Kette, insbesondere einer Gliederkette, entlang des Reluktanzsensors wechselt mit dem Wechsel von Kettengelenk zu Zwischenraum zwischen den Kettengelenken auch der Weg mit dem geringsten magnetischen Widerstand für die von den Dauermagneten auf den seitlichen Jochschenkeln induzierten geschlossenen magnetischen Kreise. Entsprechend wechselt auch das über den Spulen anliegende Magnetfeld, so dass an den Spulen der Kettensensoren eine wechselnde Spannung in Abhängigkeit der Lage und der Geschwindigkeit der Kette erzeugt wird. Der erfindungsgemäße Reluktanz-Kettensensor kann trotz seines einfachen Aufbaus in simpler Weise in neue Herstellungsanlagen und Fördersysteme integriert, aber auch bei bestehenden Anlagen ohne Aufwand nachgerüstet werden. Durch die besondere Konstruktion ist der Kettensensor sowohl wartungsfrei als auch widerstandsfähig gegen Wasser, Öl, Schmutz, hohe Temperaturen sowie aggressive Umgebungsbedingungen, gegen die auch die Antriebskette selbst resistent ist. Darüber hinaus sind Reluktanz-Kettensensoren sowohl unabhängig von der Kettenart als auch von Markierungen an der Kette. Im Betrieb kann der Kettensensor die Antriebskette selbständig erkennen und die Kettenlängung unabhängig von der Geschwindigkeit der Antriebskette bestimmen. Neben einem an sich relativ kostengünstigen Reluktanzsensor zur Messung der Kettenlängung kann mit dem Einsatz des erfindungsgemäßen Kettensensors eine einfache Verschleißüberwachung von kettengetriebenen Förder- und Produktionsanlagen bei geringen Kosten erreicht werden.

Für eine klare Trennung der Ausbildung der zwei geschlossenen magnetischen Kreise können die mindestens zwei Dauermagneten auf den äußeren Zähnen der Jochschenkel des ersten Reluktanzsensors, bevorzugt an den Spitzen der äußeren Zähne, angeordnet sein. Die Anordnung der zwei Dauermagneten auf den äußeren Zähnen der Jochschenkel, bevorzugt an den Spitzen der äußeren Zähne ermöglichen neben einer einfachen Anbringung der Dauermagneten an dem magnetisch leitfähigen Jochkörper, der beispielsweise aus einem weichmagnetischen Material hergestellt ist, auch eine sichere Überleitung der Feldlinien der geschlossenen magnetischen Kreise auf das Kettengelenk. Weiter verhindert diese Anordnung der mindestens zwei Dauermagneten einen ungewollten Kurzschluss des magnetischen Kreises über den die jeweiligen Dauermagneten tragenden Jochschenkel.

Eine zweckmäßige Ausgestaltung sieht vor, dass ein zweiter Reluktanzsensor vorgesehen ist, der zweite Reluktanzsensor weist ebenfalls einen magnetisch leitfähigen Jochkörper mit einem Mittelschenkel und zwei sich seitlich dazu erstreckende Jochschenkel auf, jeder Jochschenkel ist mit zwei der Kette zugewandten Zähnen versehen, wobei die Zähne in geringem Abstand zur Kette anordbar sind und dem ersten Reluktanzsensor zugewandt sind. Der Einsatz eines zweiten Reluktanzsensors, der auch ohne eine zweite Spule und ohne Dauermagneten ausgeführt sein kann, ermöglicht eine gleichmäßige, von der Kette unabhängige Ausbildung der zwei geschlossenen magnetischen Kreise sowie einen regelmäßigen Wechsel des die mindestens eine Spule durchströmenden Magnetfelds, so dass an der mindestens einen Spule in Abhängigkeit der Geschwindigkeit der Kette eine relativ gleichmäßige, wiederkehrende Wechselspannung anliegt.

Bevorzugt kann auf dem Mittelschenkel des zweiten Reluktanzsensors eine zweite Spule angeordnet sein, wobei die induktiven Spulen auf dem ersten und zweiten Reluktanzsensor parallel oder in Reihe geschaltet werden können. Die zweite Spule auf dem Reluktanzsensor verstärkt nicht nur das Messsignal des Kettensensors, sondern ermöglicht auch eine Vergleichmäßigung des Messsignals und eine Reduzierung von Messfehlern. Darüber hinaus kann der zweite Reluktanzsensor auch mit zwei Dauermagneten versehen sein, die jeweils auf einen der zwei sich seitlich erstreckender Jochschenkeln angeordnet sind.

Eine besondere Ausführungsform sieht vor, dass die seitlichen Jochschenkel des ersten und zweiten Reluktanzsensors jeweils mit einem Dauermagneten versehen sind, wobei die Dauermagnete jeweils an den äußeren Zähnen der Jochschenkel, bevorzugt an deren Spitzen, angeordnet sind, und wobei die Dauermagnete auf den Jochschenkeln des ersten Reluktanzsensors eine gleiche Polrichtung aufweisen und die Dauermagnete auf den Jochschenkeln des zweiten Reluktanzsensors eine umgekehrte Polrichtung aufweisen. Unabhängig von der Möglichkeit, nur auf den Außenzähnen der Jochschenkel des ersten Reluktanzsensors zwei Dauermagnete vorzusehen, wird durch die Ausrichtung der Dauermagnete des ersten Reluktanzsensors bzw. des zweiten Reluktanzsensors in gleicher Polrichtung erreicht, dass die Feldlinien der zwei geschlossenen magnetischen Kreise sich in gleicher Richtung durch die inneren Zähne erstrecken, wodurch die gegenseitige Beeinflussung der zwei geschlossenen magnetischen Kreise gering gehalten wird. Darüber hinaus wir die optionale zweite Spule auf dem zweiten Reluktanzsensor in gleicher Weise, aber unterschiedlicher Richtung, von dem jeweils aktiv wirkenden magnetischen Kreis durchströmt und kann so das Signal der mindestens einen Spule auf den ersten Reluktanzsensor verstärken und vergleichmäßigen.

Eine weitere Ausbildung des erfindungsgemäßen Reluktanz-Kettensensors für eine Gelenkkette mit einer gleichmäßigen Teilung zwischen den Kettengelenken sieht vor, dass der mindestens eine erste Reluktanzsensor senkrecht zur Gelenkachse der Kettengelenke auf einer Seite der Gelenkkette angeordnet ist, wobei die Zähne der Jochschenkel des ersten Reluktanzsensors der Gelenkkette zugewandt sind. Durch diese Anordnung des mindestens einen ersten Reluktanzsensors verlaufen die Feldlinien der zwei geschlossenen magnetischen Kreise senkrecht zu den Gelenkachsen. Die senkrechte Anordnung des ersten Reluktanzsensors ermöglicht einen sehr geringen Abstand zwischen den Zähnen der seitlichen Jochschenkel und den Kettengelenken der Gelenkkette, so dass der magnetische Widerstand über diesen Abstand hin möglichst gering ist. Für eine möglichst störungsfreie und gleichmäßige Ausbildung der zwei magnetischen Kreise kann auf der dem ersten Reluktanzsensor abgewandten Gegenseite der Gelenkkette ein Joch mit einem geringen magnetischen Widerstand vorgesehen sein, wobei die zwei geschlossenen magnetischen Kreise über das Joch verlaufen können und so deren Ausbildung von Störeinflüssen durch die sich bewegende Gelenkkette unabhängiger machen.

Eine Variante des erfindungsgemäßen Kettensensors sieht vor, dass ein zweiter Reluktanzsensor vorgesehen ist, der senkrecht zur Gelenkachse der Kettengelenke auf einer gegenüberliegenden Seite der Gelenkkette angeordnet ist, wobei die Zähne der Jochschenkel des zweiten Reluktanzsensors der Gelenkkette zugewandt sind. Durch die Anordnung eines zweiten Reluktanzsensors auf einer gegenüberliegenden Seite der Gelenkkette verlaufen die Feldlinien der zwei geschlossenen magnetischen Kreise senkrecht zu den Gelenkachsen durch die Kettengelenke und dann über die Jochschenkel des zweiten Reluktanzsensors, so dass der magnetische Widerstand bzw. die Reluktanz der zwei geschlossenen magnetischen Kreise minimiert werden kann. Dabei kann der Abstand der einander zugeordneten Zähne der ersten und zweiten Reluktanzsensoren maximal 20 %, bevorzugt maximal 10 %, insbesondere maximal 5 % größer sein als der äußere Durchmesser der Kettengelenke der Gelenkkette. Je kleiner der Abstand der Zähne des ersten und zweiten Reluktanzsensors zueinander bzw. zu den Kettengelenken der Gelenkkette ist, desto geringer ist auch der Widerstand für die von den Dauermagneten induzierten magnetischen Kreise und desto stärker ist auch das induzierte Wechselspannungssignal an den Spulen.

Zweckmäßigerweise kann der Abstand des äußeren Zahns des einen Jochschenkels zum inneren Zahn des anderen Jochschenkels des ersten oder zweiten Reluktanzsensors im Wesentlichen ein ganzzahliges Vielfaches der Teilung der Gelenkkette betragen. Mit einer solchen konstruktiven Ausgestaltung der Jochschenkel des Kettensensors ist die Erzeugung einer gleichmäßigen Wechselspannung an der mindestens einen Spule des ersten Reluktanzsensors und optional auch an einer zweiten Spule möglich. Im Hinblick auf Produktionstoleranzen und die Verschleißlängung der Gelenkkette ist für ein im Wesentlichen ganzzahliges Vielfaches ein Toleranzbereich von ± 10 % des Teilungsabstandes zu berücksichtigen.

In einem weiteren Aspekt betrifft die vorliegende Erfindung eine Vorrichtung zur Messung der Kettenlängung einer Kette mit mindestens zwei Reluktanz-Kettensensoren, die in einem Abstand zueinander entlang der Kette angeordnet sind, und mit einer Steuereinheit zum Aufnehmen und Verarbeiten der Signale der zwei Kettensensoren, wobei die an jedem Kettensensor vorgesehene mindestens eine Spule im Betrieb ein Wechselspannungssignal erzeugt. Über die beiden Sensorhälften können die Kettensensoren einfach an der Kette, üblicherweise eine Rollenkette, angeordnet werden, ohne Markierungen an der Kette selbst anbringen zu müssen oder die Kette durch einen Sensor hindurchfädeln zu müssen. Die mit den Kettensensoren verbundene Steuereinheit ermöglicht neben einer reinen Überwachung der Kettenlängung bzw. des Kettenverschleißes auch die Erfassung weiterer Betriebsparameter, wie beispielsweise der Betriebsstunden, sowie die Einbindung von Sicherheitsfunktionen, z.B. einen Alarm beim Überschreiten eines vorgegebenen Verschleißwertes, einer Stoppfunktion bei kritischen Verschleißzuständen, einen Schutzmodus mit reduzierter Geschwindigkeit ab einem erhöhten Verschleißwert sowie eine sichere Erkennung von Verschleißzuständen und eine Kompensation der Kettenlängung bei relevanten Bauteilen. Des Weiteren lassen sich über die Steuereinheit Messwerte und Steuerdaten an einen zentralen Prozessrechner oder an Produktionswarten übergeben.

Eine besondere Ausführung der Vorrichtung sieht vor, dass mindestens drei Kettensensoren vorgesehen sind. Ein dritter Kettensensor ermöglicht es, unabhängig von einem genau auf die Kettenteilung abgestimmten Abstand der zwei ersten Reluktanz-Kettensensoren, die Bewegungsrichtung der Kette immer sicher zu bestimmen.

Für eine sichere Auswertung und eine exakte zeitliche Zuordnung der Kettenlängungsmessung kann für jeden Kettensensor ein Komparator zur Umwandlung der Wechselspannungssignale in Rechtecksignale vorgesehen sein. Der Einsatz von Komparatoren ermöglicht über die Differenzierung des Wechselspannungssignals, d.h. Umwandlung des Wechselspannungssignals in ein Rechtecksignal eine exakte zeitliche Zuordnung des Phasenwechsels der Wechselspannung, der dann erreicht wird, wenn allen Zähnen der Jochkörper in gleicher Weise die Zwischenräume zwischen den Kettengelenken zugeordnet sind. Dabei ist die Periodendauer des Rechtecksignals umgekehrt proportional zur Geschwindigkeit der Kette. Entsprechend kann der Abstand der Schaltimpulse der beiden Kettensensoren im Verhältnis zur Periodendauer ein eindeutiges Maß für die Kettenlänge bereitstellen.

Eine besondere Ausgestaltung der Vorrichtung zur Messung der Kettenlängung einer Kette mit zwei Reluktanz-Kettensensoren sieht vor, dass die Steuereinheit die Wechselspannungssignale zur Stromversorgung, bevorzugt zur autarken Stromversorgung der Vorrichtung nutzt. Durch die Bewegung der Kette entlang der Kettensensoren und entsprechend durch die zwei magnetischen Kreise der Sensoren, von denen jeweils einer im Wechsel der Kettengelenke der Kette die mindestens eine Spule durchflutet, wird an den Spulen der Kettensensoren eine Wechselspannung erzeugt, die für den Betrieb der Vorrichtung nutzbar ist. Entsprechend wirken die Reluktanz-Kettensensoren gleichzeitig als Generatoren. Die Möglichkeit der autarken Stromversorgung der Steuereinheit sowie zugehöriger Komponenten zur Datenübertragung und Visualisierung der Messdaten ermöglicht eine einfache Einbindung solcher Vorrichtungen in bestehende Maschinen und Anlagen ohne in das üblicherweise komplexe Konzept der Energieversorgung bestehender Maschinen und Anlagen einzugreifen. Mit einer solchen generischen Vorrichtung kann der Zustand eines Kettenbetriebs auch in bestehenden Anlagen zu jedem Zeitpunkt erfasst und eine frühzeitige Warnung oder eine automatische Synchronisation der Anlage autark ermöglicht werden. Dieser Aspekt der vorliegenden Erfindung könnte auch unabhängig von den Details der erfindungsgemäßen Reluktanz-Kettensensoren sowie der Vorrichtung zur Messung der Kettenlängung Schutz genießen und selbständig weiterverfolgt werden. Der Einsatz der Kettensensoren als Generatoren zur Stromversorgung sichert einen autarken Betrieb entsprechender Meßeinrichtungen.

Eine geeignete Ausbildung der Vorrichtung sieht vor, dass eine Anzeigeeinheit zur Darstellung der Kettenlängung der Kette vorgesehen ist. Neben der einfachen Ablesbarkeit der Kettenverschleißlänge und des Betriebszustandes der Antriebskette ermöglicht eine solche Anzeigeeinheit auch die Darstellung weiterer wichtiger Betriebs- und Sicherheitsparameter wie beispielsweise Betriebsstundenzähler, Warnfunktionen und Fehleranzeigen. Dabei kann die Anzeigeeinheit zur Darstellung der Kettenlängung ebenso wie die Steuereinheit über die Kettensensoren autark mit der notwendigen Energie zum Betrieb der Anzeigeeinheit versorgt werden.

Die vorliegende Erfindung betrifft weiter ein Verfahren zur Messung der Kettenlängung einer Kette mit mindestens zwei Reluktanz-Kettensensoren, die in einem Abstand zueinander entlang der Kette angeordnet sind, wobei jeder Kettensensor mindestens eine Spule und mindestens zwei Dauermagnete aufweist. Dieses Verfahren umfasst das Ausbilden von zwei geschlossenen dauermagnetischen Kreisen mit einem geringen magnetischen Widerstand (Reluktanz) gegenüber den magnetischen Feldlinien über jeden Kettensensor, wobei in Abhängigkeit der Position der Kette zum Kettensensor die zwei geschlossenen magnetischen Kreise jeweils im Kurzschluss über den Kettensensor geführt werden oder wobei jeweils einer der geschlossenen magnetischen Kreise zumindest teilweise die mindestens eine Spule durchflutet und der andere der geschlossenen magnetischen Kreise weiter im Kurzschluss über den Kettensensor geführt wird; Bewegen der Kette in einer Richtung entlang der zwei Kettensensoren; periodischer Wechsel der zumindest teilweise die mindestens eine Spule durchflutenden magnetischen Kreise; und Erzeugen einer Wechselspannung an den Spulen der zwei Kettensensoren. Da die Lage der zwei geschlossenen magnetischen Kreise in den Kettensensoren von der Position der Kette zu den Sensoren abhängt, bilden sich entsprechend der Bewegung der Kette relativ zu den Kettensensoren magnetische Kreise aus, die ihre Lage in den Kettensensoren in Abhängigkeit der Lage der Kette verändert. Da die von den Dauermagneten induzierten magnetischen Kreise das Bestreben haben, den magnetischen Fluss zwischen den Polen des Dauermagneten über einen magnetischen Kreis mit einem möglichst geringen magnetischen Widerstand oder Reluktanz zu schließen, verändert sich mit einer Bewegung der Kette relativ zu den Kettensensoren auch die Lage der zwei magnetischen Kreise in den Kettensensoren und damit auch deren Lage relativ zu der mindestens einen Spule.

Der magnetische Widerstand bzw. die Reluktanz ist der Proportionalitätsfaktor zwischen der magnetischen Spannung sowie dem magnetischen Fluss verhält sich in Analogie zum elektrischen Widerstand, welcher entsprechend dem Ohmschen Gesetz den Faktor zwischen elektrischer Spannung und elektrischem Strom darstellt. Mit einer entsprechenden Anordnung der mindestens zwei Dauermagneten in den Kettensensoren lassen sich die zwei geschlossenen magnetischen Kreise so ausgestalten, dass die magnetischen Kreise zumindest teilweise die Spule durchfluten. Da die Kette je nach Lage der Kettenglieder die magnetischen Kreise unterschiedlich lang über die Spule oder nur im Kurzschluss über einen Jochschenkel schließt, entsteht bei einer Bewegung der Kette in Richtung entlang der Kettensensoren ein periodischer Wechsel der zumindest teilweise die Spule durchflutenden magnetischen Kreise. Da der jeweils im Kurzschluss geschlossene magnetische Kreis nicht über die Spule fließt, wird über den periodischen Wechsel der zwei geschlossenen magnetischen Kreise an der Spule eine Wechselspannung erzeugt. Dabei ist das Maximum der Wechselspannung ein wiederkehrendes Kennzeichen für eine Lage der Kette zum Kettensensor in der der über die mindestens eine Spule geleitete magnetische Kreis den geringsten magnetischen Widerstand widerfährt, was üblicherweise durch die Lage eines Kettengelenks in dem magnetischen Kreis gegeben ist, d.h. zwischen den Zähnen der Jochschenkel des Kreises.

Eine sinnvolle Weiterbildung des Verfahrens zur Messung der Kettenlängung einer Kette sieht das Differenzieren der Wechselspannung und Erzeugen eines separaten Rechtecksignals für beide Kettensensoren sowie die Bestimmung der Periodendauer der Rechtecksignale der Kettensensoren vor. Mit einer Differenzierung des Wechselspannungssignals, beispielsweise mit einem Komparator, lässt sich ein charakteristisches Rechtecksignal erzeugen, mit dem eine exakte zeitliche Zuordnung des Spannungswechsels erzielt werden kann, entsprechend dem Wechsel der die Spule durchflutenden magnetischen Kreise. Der Ausgang des Komparators stellt dabei ein Rechtecksignal zur Auswertung der Kettenverschleißlängung zur Verfügung, dessen Periodendauer umgekehrt proportional zur Geschwindigkeit der Kette ist.

Eine weitere Ausbildung des Verfahrens sieht weiter die folgenden Schritte vor, Bestimmen des zeitlichen Abstands der Schaltsignale der jeweiligen Rechtecksignale beider Kettensensoren, bzw. den zeitlichen Abstand der Schaltschwellen, Berechnen eines Schaltverhältnisses aus dem zeitlichen Abstand der Schaltschwellen im Verhältnis zur Periodendauer der Rechtecksignale und Vergleichen des berechneten Schaltverhältnisses mit einem gespeicherten Schaltverhältnis für einen Ausgangszustand der Kette, wobei dieser Vergleichswert ein Maß für die relative Kettenlängung ist. Dabei ist das berechnete Schaltverhältnis ein direktes eindeutiges Maß für die aktuelle Kettenlängung gegenüber dem Ausgangszustand. Der Abstand zwischen dem Schaltimpuls der Rechtecksignale beider Kettensensoren kann dabei je nach gewünschtem Auswertealgorithmus ins Verhältnis gesetzt werden zu der Periodendauer eines der Kettensensoren oder zu den gemittelten oder addierten Periodendauern beiden Kettensensoren. Zur Dokumentation eines Ausgangszustands der Kette wird dieses Schaltverhältnis für eine neue Kette über eine bestimmte Zeitdauer erfasst und als Vergleichswert abgespeichert. Dieser ursprüngliche Vergleichswert für eine bestimmte Kette kann dann zum Berechnen und zur Darstellung der verschleißbedingten Kettenlängung dieser Kette verwendet werden. Darüber hinaus kann der Vergleichswert zwischen dem berechneten Schaltverhältnis und dem Ausgangszustand der Kette als Steuergröße für das Synchronisieren der Kettenstellung gegenüber anderen mittels der Kette aktuierten Elementen verwendet werden, um so einen optimalen Betrieb der angetriebenen Vorrichtung zu ermöglichen.

Zur eindeutigen Bestimmung der Bewegungsrichtung der Gliederkette kann ein dritter Reluktanz-Kettensensor vorgesehen sein. Die Bewegungsrichtung der Kette kann zwar auch bei einer genauen Platzierung von nur zwei Kettensensoren erkannt werden, jedoch müssen die zwei Kettensensoren dann so angeordnet werden, dass diese eindeutig um einen halben Teilungsabstand versetzt sind und dürfen diese Eindeutigkeit der Positionierung auch bei einer Längung der Kette nicht verlieren. Mit einem dritten Reluktanz-Kettensensor kann demgegenüber die Bewegungsrichtung der Kette immer sicher erkannt werden. Dazu wird der dritte Kettensensor mit nur einem geringen mechanischen Versatz, einer geringen Differenz zu einer ganzzahligen Kettenteilung, gegenüber einem der ersten beiden Kettensensoren angeordnet. Durch den geringen mechanischen Versatz kann nach einer Differenzierung und Rechtecksignalbildung mittels Komparatoren aus dem Spannungssignal des dritten Kettensensors ein eindeutiges Zielsignal gewonnen werden, aus dem man sicher die Bewegungsrichtung der Kette erkennen kann.

Im Folgenden wird eine Ausführungsform der vorliegenden Erfindung näher erläutert. Es zeigen:
- Fig. 1: eine perspektivische Ansicht eines erfindungsgemäßen Kettensensors mit einem ersten Reluktanzsensor und einer Gelenkkette;
- Fig. 2a: eine Seitenansicht eines erfindungsgemäßen Kettensensors mit zwei Reluktanzsensoren auf gegenüberliegenden Seiten einer Gelenkkette in einer ersten Position;
- Fig. 2b: eine Seitenansicht eines erfindungsgemäßen Kettensensors mit zwei Reluktanzsensoren auf gegenüberliegenden Seiten einer Gelenkkette in einer zweiten Position;
- Fig. 3: eine Vorrichtung zur Messung der Kettenlängung einer Kette mit zwei Kettensensoren nach Fig. 2A und Fig. 2B; und
- Fig. 4: die Vorrichtung aus Fig. 3 mit einer Signal- und Energieversorgungsschaltung.

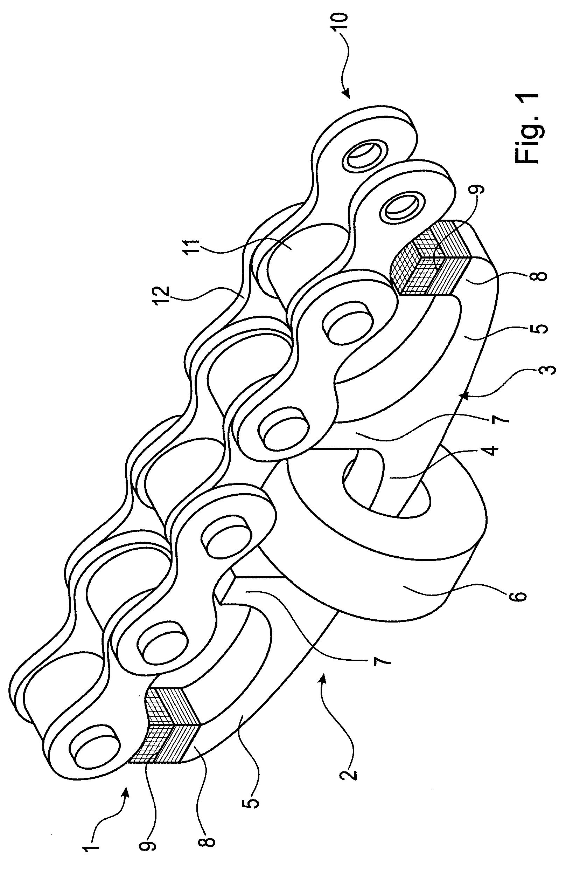

In Fig. 1 ist eine schematische Darstellung eines erfindungsgemäßen Kettensensors 1 mit einem ersten Reluktanzsensor 2 in einer perspektivischen Ansicht zu sehen. Der Reluktanzsensor 2 weist einen Jochkörper 3 aus einem magnetisch leitfähigen bzw. magnetfelddurchlässigen Material auf, der neben einem Mittelschenkel 4 auch zwei sich seitlich zum Mittelschenkel 4 erstreckende Jochschenkel 5 aufweist. Auf dem Mittelschenkel 4 ist eine Spule 6 angeordnet, die sich über die gesamte Länge des Mittelschenkels 4 zwischen den Innenzähnen 7 der angrenzenden Jochschenkel 5 erstrecken kann. Die Jochschenkel 5 weisen neben den an den Mittelschenkel 4 angrenzenden Innenzähnen 7 auch Außenzähne 8 auf, die jeweils am äußeren Ende der Jochschenkel angeordnet sind. Die Innenzähne 7 und die Außenzähne 8 stehen gegenüber einem mittleren Abschnitt der Jochschenkel 5 in Richtung einer Gelenkkette 10 vor, so dass sich zwischen den Innenzähnen 7 und Außenzähnen 8 der Jochschenkel 5 und der Gelenkkette 10 ein Hohlraum ausbildet, der im Gegensatz zu dem magnetisch leitfähigen Jochkörper 3 einen hohen magnetischen Widerstand bzw. eine hohe Reluktanz gegenüber den Feldlinien magnetischer Kreise aufweist.

An den Außenzähnen 8 der beiden Jochschenkel 5 sind jeweils Dauermagnete 9 vorgesehen. Dabei sind die Dauermagnete 9 an den Spitzen der Außenzähne 8 in gleicher Polrichtung angeordnet, d.h. die freien äußeren Spitzen der Außenzähne 8 weisen beide den Pluspol oder alternativ den Minuspol der Dauermagneten 9 auf. Die Innenzähne 7 und Außenzähne 8 der Jochschenkel 5 sind in Richtung der Gelenkkette 10 ausgerichtet, wobei der Reluktanzsensor 2, bzw. die Feldlinien der magnetischen Kreise 13, 14 der Dauermagneten 9 wie auch die Seitenflächen des Jochkörpers 3 im Wesentlichen senkrecht zu den Gelenkachsen der Kettengelenke 11 der Gelenkkette 10 stehen. Dabei weisen die Spitzen der Innenzähne 7 und Außenzähne 8 der Jochschenkel 5 jeweils nur einen geringen Abstand zu der Außenumfangsfläche der Kettengelenke 11 auf, so dass die Gelenkkette 10 im Wesentlichen berührungsfrei an dem Reluktanzsensor 2 entlang bewegt werden kann.

Die Dauermagneten 9 an den Spitzen der Außenzähne 8 der Jochschenkel 5 bilden zwei magnetische Kreise 13, 14 aus, deren Feldlinien entsprechend dem Hopkinsonschen Gesetz entlang des geringsten magnetischen Widerstands bzw. der geringsten Reluktanz verlaufen. Dabei wird je nach Position der Gelenkkette 10 die Spule 6 wechselweise von einem der zwei geschlossenen magnetischen Kreise 13, 14 durchflutet werden, so dass die Spule 6 ein charakteristisches Spannungssignal erzeugt. Um das Spannungssignal, optimalerweise ein Wechselspannungssignal, an der Spule 6 von konstruktiven Störeinflüssen der Gelenkkette 10 zu befreien, und/oder das Spannungssignal bei einem hohen magnetischen Widerstand der Kettenlaschen 12 der Gelenkkette 10 zu verstärken, kann auf der dem Reluktanzsensor 2 gegenüberliegenden Seite der Gelenkkette 10 ein weiterer magnetisch leitfähiger Körper angeordnet werden, bevorzugt ein Körper mit komplementär zu den Innenzähnen 7 und Außenzähnen 8 des Jochkörpers 3 des ersten Reluktanzsensors 2 angeordneten Vorsprüngen, oder ein zweiter Reluktanzsensor 2' mit oder ohne eine zweite Spule 6', um die von den Dauermagneten 9 induzierten magnetischen Kreise 13, 14 über die Kettengelenke 11 der Gelenkkette 10 mit geringer Reluktanz zu schließen.

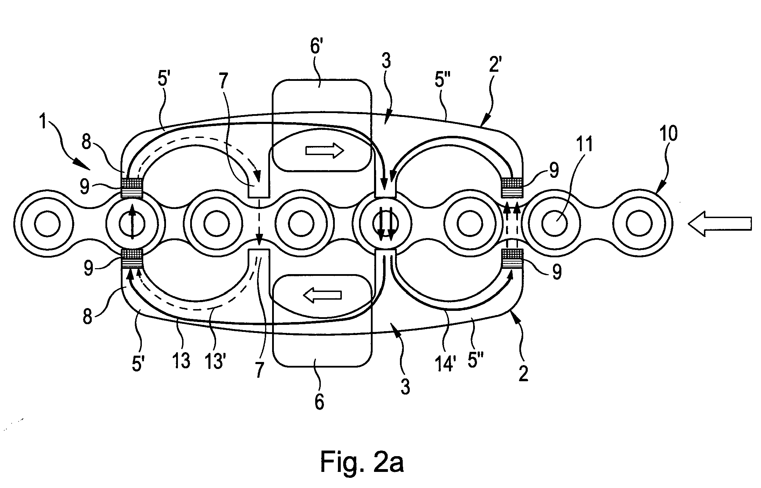

Fig. 2a zeigt eine bevorzugte Ausgestaltung eines erfindungsgemäßen Reluktanz-Kettensensors 1 mit zwei Reluktanzsensoren 2, 2', die an der Oberseite und Unterseite der Gelenkkette 10 senkrecht zu den Gelenkachsen der Kettengelenke 11 angeordnet sind. Dabei sind beide Reluktanzsensoren 2, 2' mit einer induktiven Spule 6, 6' versehen, die jeweils auf dem Mittelschenkel 4 des Jochkörpers 3 angeordnet ist. Die Gelenkkette 10 kann sich im Wesentlichen berührungsfrei oder zumindest mit geringem Reibungswiderstand, zwischen den beiden Reluktanzsensoren 2, 2' hindurch bewegen, wobei der Abstand zwischen den einander zugeordneten Außenzähnen 8 und Innenzähnen 7 der beiden Reluktanzsensoren 2, 2' nur geringfügig größer ist als der Außendurchmesser der Kettengelenke 11, so dass die Reluktanz zwischen den einzelnen Paarungen der Außenzähne 8 und Innenzähne 7 beim Durchgang eines Kettengelenks 11 zwischen den jeweiligen Zahnpaarungen möglichst gering ist.

Die Reluktanzsensoren 2, 2' des Kettensensors 1 in Fig. 2a weisen jeweils an den Spitzen der Außenzähne 8 zwei Dauermagneten 9 auf, wobei die Polrichtung der auf die Gelenkkette 10 ausgerichteten Dauermagneten 9 auf den einzelnen Reluktanzsensoren 2, 2' jeweils gleich ist, gegenüber den Dauermagneten auf den jeweils anderen Reluktanzsensoren 2, 2' jedoch unterschiedlich ist. Entsprechend sind die Polrichtungen der einander zugeordneten Dauermagneten 9 an den Außenzähnen 8 jeweils unterschiedlich, so dass sich über beide einander zugeordnete Dauermagnete 9 jeweils ein magnetischer Kreis 13, 14 ausbildet. Folglich erstrecken sich die magnetischen Kreise 13, 14 jeweils über beide Reluktanzsensoren 2, 2'. Dabei schließt die Gelenkkette 10 zwischen den Jochkörpern 3 der Reluktanzsensoren 2, 2' die magnetischen Kreise 13, 14 je nach Lage der Kettengelenke 11 unterschiedlich kurz und auch mit einer unterschiedlichen Reluktanz.

In der in Fig. 2a gezeigten Position der Gelenkkette 10 ist der magnetische Kreis 13 über die linksseitigen Jochschenkel 5' der Reluktanzsensoren 2, 2' geschlossen, d.h. über das zwischen den Dauermagneten 9 an den Spitzen der Außenzähne 8 liegende Kettengelenk 11 der Gelenkkette 10, die linksseitigen Jochschenkel 5' und die Mittelschenkel 4 der Reluktanzsensoren 2, 2' sowie über die Innenzähne 7 der rechtsseitigen Jochschenkel 5" und das zwischen den Innenzähnen 7 angeordnete Kettengelenk 11 geschlossen. Das Magnetfeld des magnetischen Kreises 13 durchflutet dabei auch die Spulen 6, 6' auf den Mittelschenkeln 4 der Reluktanzsensoren 2, 2' in der mit den gefüllten Pfeilen in Fig. 2a dargestellten Richtung. Trotz des für die Feldlinien des magnetischen Kreises 13 längeren Weges und des Widerstands beim Durchflutens der induktiven Spulen 6, 6' verläuft in dieser Position der Gelenkkette 10 der Hauptteil der Feldlinien des magnetischen Kreises 13 über die Innenzähne 7 der rechtsseitigen Jochschenkel 5" und damit auch über die induktiven Spulen 6, 6', da der magnetische Widerstand bei einem Kurzschluss des magnetischen Kreises 13 über die linksseitigen Jochschenkel 5' der Reluktanzsensoren 2, 2' über den Kurzschlusskreis 13' höher ist. Zwischen den Innenzähnen 7 der linksseitigen Jochschenkel 5' ist in der in Fig. 2a gezeigten Position der Gelenkkette 10 eine Kettenlücke, d.h. der Zwischenraum zwischen zwei Kettengelenken 11, so dass hier die Feldlinien nur über den großen Luftspalt der Kettenlücke zwischen den Innenzähnen 7 sowie teilweise über die schmalen seitlichen Kettenlaschen 12 der Gelenkkette 10, und damit mit einem entsprechend hohen magnetischen Widerstand, übertragen werden können. Trotz des sehr viel höheren magnetischen Widerstands zwischen den Innenzähnen 7 der linksseitigen Jochschenkel 5' durchströmt entsprechend dem Hopkinsonschen Gesetz auch ein geringerer magnetischer Fluss den magnetischen Kurzschlusskreis 13' über die linksseitigen Jochschenkel 5'.

Die Dauermagnete 9 an den Spitzen der Außenzähne 8 der rechtsseitigen Jochschenkel 5" erzeugen trotz des magnetischen Widerstands durch die Kettenlücke zwischen den Dauermagneten 9 an den Außenzähnen 8 ein weiteres Magnetfeld, den zweiten dauermagnetischen Kreis 14, der über das Kettengelenk 11 zwischen den Innenzähnen 7 der rechtsseitigen Jochschenkel 5" als magnetischer Kurzschlusskreis 14' geschlossen ist und sich so im Wesentlichen nur über die rechtsseitigen Jochschenkel 5" der beiden Reluktanzsensoren 2, 2' erstreckt.

Bei einer Bewegung der Gelenkkette 10 in der durch den konturierten Pfeil in Fig. 2a dargestellten Kettenlaufrichtung verändert sich auch die Lage der Kettengelenke 11 zu den Zahnpaarungen der Innenzähne 7 und Außenzähne 8 der linksseitigen und rechtsseitigen Jochschenkel 5', 5" und damit auch die Ausbildung der magnetischen Kreise 13, 14. Bei einem Anstieg der Reluktanz zwischen den Innenzähnen 7 der rechtsseitigen Jochschenkel 5" und einer gleichzeitigen Verringerung der Reluktanz zwischen den Innenzähnen 7 der linksseitigen Jochschenkel 5' verschiebt sich der magnetische Fluss vom magnetischen Kreis 13 durch die Spulen 6, 6' hin zum magnetischen Kurzschlusskreis 13', bis im Wesentlichen der gesamte magnetische Fluss über den Kurzschlusskreis 13' verläuft.

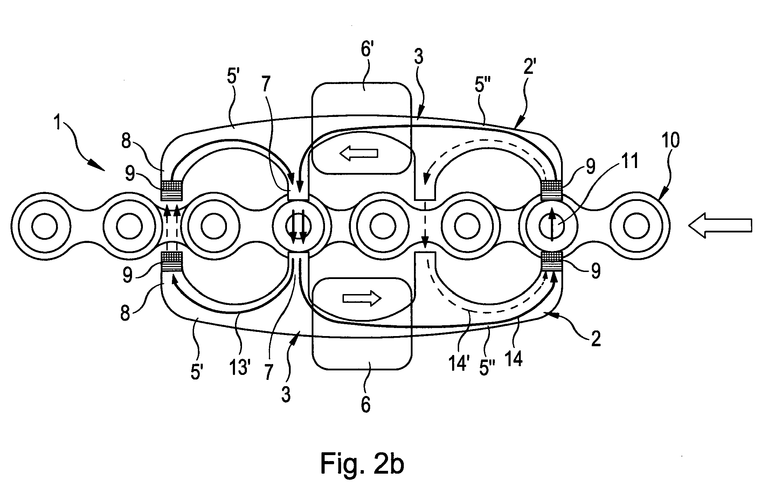

Fig. 2b zeigt den bereits in Fig. 2a dargestellten Kettensensor 1 mit zwei Reluktanzsensoren 2, 2', die senkrecht zur Gelenkachse der Kettengelenke 11 oberhalb und unterhalb der Gelenkkette 10 angeordnet sind. Im Gegensatz zu der vorhergehenden Darstellung des Kettensensors 1 ist in Fig. 2b die Gelenkkette 10 um einen halben Teilungsabstand (pitch) der Kettengelenke 11 weiter in Richtung der Kettenlaufrichtung fortbewegt. Durch diese neue Position der Gelenkkette 10 ist jetzt der magnetische Kreis 14 über die Innenzähne 7 des linksseitigen Jochschenkels 5' geschlossen, wobei sich der magnetische Kreis 14 ausgehend von den Dauermagneten 9 an den Spitzen der rechtsseitigen Außenzähne 8, zwischen denen sich in dieser Position der Gelenkkette 10 ein Kettengelenk 11 befindet und das den magnetischen Widerstand gegenüber den Feldlinien des magnetischen Kreises 14 auf ein Minimum reduziert, über die rechtsseitigen Jochschenkel 5", die Mittelschenkel 4 und die Innenzähne 7 der linksseitigen Jochschenkel 5' des oberen und unteren Reluktanzsensors 2, 2' sowie das zwischen den Innenzähnen 7 der linksseitigen Jochschenkel 5' positionierte Kettengelenk 11 der Gelenkkette 10 erstreckt. Dabei durchflutet der von den Dauermagneten 9 induzierte magnetische Kreis 14 die induktiven Spulen 6, 6' auf den Mittelschenkeln 4 der Reluktanzsensoren 2, 2' in einer Gegenrichtung gegenüber der in Fig. 2a gezeigten Magnetfeldrichtung. Auch hier bildet sich wiederum über die rechtsseitigen Jochschenkel 5" ein magnetischer Kurzschlusskreis 14' aus, dessen magnetischer Fluss umgekehrt proportional zu dem magnetischen Widerstand des Kurzschlusskreises 14' über die Innenzähne 7 der rechtsseitigen Jochschenkel 5" ist.

Bei einer kontinuierlichen Bewegung der Gelenkkette 10 in Richtung der durch den konturierten Pfeil dargestellten Kettenlaufrichtung zwischen den zwei Reluktanzsensoren 2, 2' des erfindungsgemäßen Kettensensors 1 hindurch, werden die induktiven Spulen 6, 6' wechselweise von den magnetischen Kreisen 13, 14 durchflutet, so dass an den Spulen 6, 6' eine Wechselspannung erzeugt wird. Dabei können die Spulen 6, 6' der Reluktanzsensoren 2, 2' je nach Anforderung an das Wechselspannungssignal in Reihe oder parallel geschaltet werden.

Die an den induktiven Spulen 6, 6' der Reluktanzsensoren 2, 2' anliegende Wechselspannung erreicht dann ihr Maximum, wenn jeweils zwischen den Innenzähnen 7 und Außenzähnen 8 der jeweiligen magnetischen Kreise 13, 14 Kettengelenke 11 der Gelenkkette 10 positioniert sind und so der magnetische Widerstand bzw. die Reluktanz der magnetischen Kreise 13, 14 am geringsten ist. Da sich während des Betriebs der Gelenkkette 10 durch die verschleißbedingte Kettenlängung das an den induktiven Spulen 6, 6' anliegende Wechselspannungssignal verändert, kann durch eine Differenzierung des Wechselspannungssignals eine genauere zeitliche Zuordnung des Signals zur Position der Gelenkkette 10 ermöglicht werden. Zur Differenzierung des Wechselspannungssignals lassen sich beispielsweise Komparatoren 15 einsetzen, mit denen sowohl ein die Wechselspannung überlagerndes Rauschen herausgefiltert oder eine nur geringe Flankensteilheit der Wechselspannung kompensiert werden kann. Weiter können Komparatoren 15 verhindern, dass die Signalspannung zu häufig und irregulär umschaltet. Mittels solcher Komparatoren 15 erhält man aus der ursprünglich induzierten Wechselspannung ein klares Rechtecksignal zur Auswertung der Kettenverschleißlängung. Dabei ist die Periodendauer des Rechtecksignals umgekehrt proportional zur Geschwindigkeit der Gelenkkette 10.

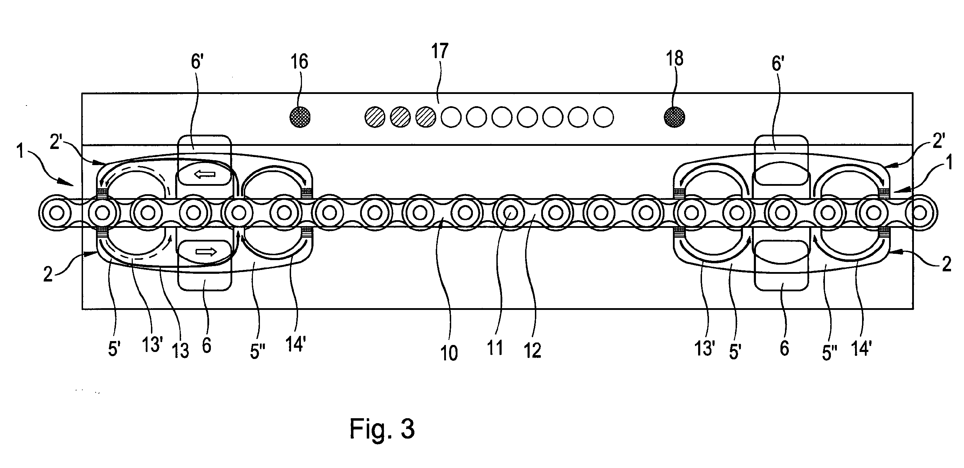

Eine erfindungsgemäße Vorrichtung zur Messung der Kettenlängung einer Gelenkkette 10 mit zwei Kettensensoren 1, die in einem Abstand zueinander angeordnet sind und durch die im Betriebszustand die Gelenkkette 10 hindurchgeführt ist, ist in Fig. 3 zu sehen. In dieser Vorrichtung sind weiter mehrere Anzeigeeinheiten vorgesehen, eine Betriebsanzeige 16, eine mehrstufige Verschleißanzeige 17 sowie eine Notfallanzeige 18, die in einer einfachen Ausführung als farbige Leuchtdioden ausgestaltet sein können. Dabei kann die gesamte Vorrichtung zur Messung der Kettenlängung der Gelenkkette 10 als kompakte Baueinheit ausgeführt sein, die sich in einfacher Weise auch an bestehenden Anlagen mit Antriebsketten installieren lässt.

Die Darstellung der erfindungsgemäßen Vorrichtung in Fig. 3 zeigt auch die magnetischen Kreise 13, 14 über die beiden Kettensensoren 1. Die Position der Gelenkkette 10 zu dem auf der linken Seite der Vorrichtung in Fig. 3 vorgesehenen Kettensensor 1 ermöglicht einen Schluss des dauermagnetischen Kreises 13 über die Spulen 6, 6' sowie einen Kurzschluss des magnetischen Kreises 14' über die rechtseitigen Jochschenkel 5" der auf unterschiedlichen Seiten der Gelenkkette 10 angeordneten Reluktanzsensoren 2, 2'. Dieser Betriebszustand des Kettensensors 1 ist im Detail auch schon mit Bezug auf die Fig. 2A beschrieben. Gegenüber dem Kettensensor 1 auf der rechten Seite der Vorrichtung aus Fig. 3 ist die Gelenkkette 10 so angeordnet, dass zwischen den Zahnpaarungen der Innenzähne 7 und Außenzähne 8 jeweils eine Kettenlücke vorgesehen ist. Da in dieser Position der Gelenkkette 10 der magnetische Widerstand zwischen den Innenzähnen 7 der linksseitigen Jochschenkel 5' und der rechtsseitigen Jochschenkel 5" im Wesentlichen gleich ist, erfolgt der magnetische Fluss ausgehend von den Dauermagneten über die magnetischen Kurzschlusskreise 13' und 14', so dass die Spulen 6, 6' im Wesentlichen nicht von einem magnetischen Fluss durchströmt werden. Entsprechend wird in dieser Position der Gelenkkette 10 an den Spulen 6, 6' auch keine Spannung induziert.

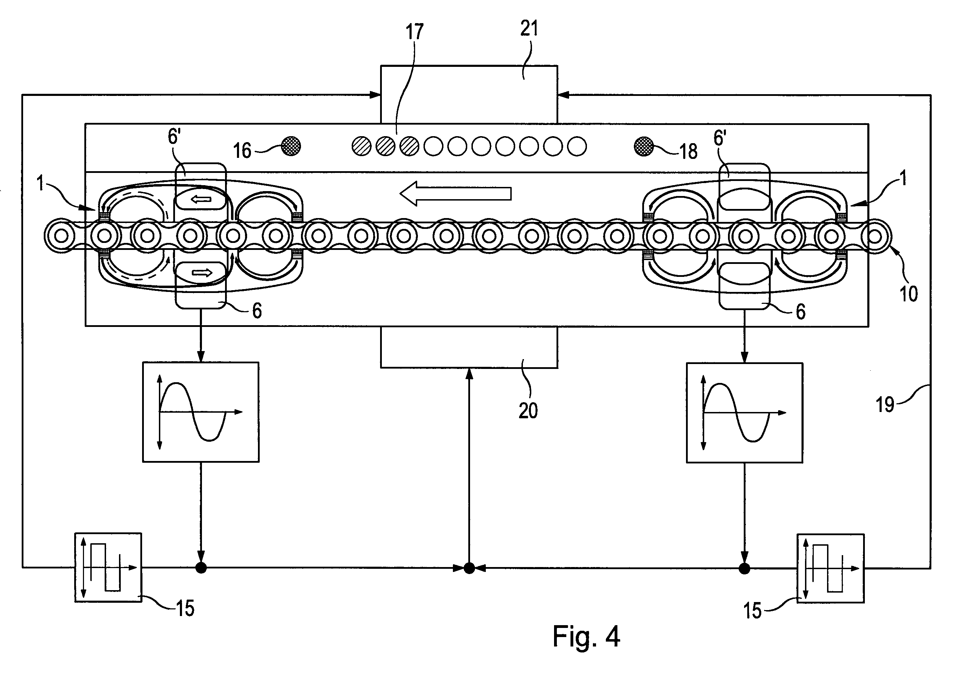

Fig. 4 zeigt die Einbindung der Messvorrichtung aus Fig. 3 in eine Signal- und Energieversorgungsschaltung. Bei einem Betrieb der Gelenkkette 10, in der durch den konturierten Pfeil dargestellten Kettenlaufrichtung, wird mittels der Bewegung der Gelenkkette 10 durch die beiden Kettensensoren 1 an den Spulen 6, 6' der einzelnen Reluktanzsensoren 2, 2' eine Wechselspannung generiert, deren Betrag und Vorzeichen sich mit dem Wechsel der dauermagnetischen Kreise 13, 14 durch die Spulen 6, 6' verändert.

Die von den Spulen 6, 6', die entsprechend den Anforderungen der Messvorrichtung in Reihe oder parallel geschaltet werden können, generierte Spannung wird in die Signal- und Energieversorgungsschaltung 19 eingespeist und von dort direkt an die Energieversorgung 20 übertragen, wobei die Signal- und Energieversorgungsschaltung 19 die Phasenverschiebung der von den zwei Kettensensoren 1 der Vorrichtung generierten Wechselspannungen berücksichtigt, sowie als Messsignal über entsprechende Komparatoren 15 an die Steuerung 21 übertragen. Dabei erfolgt an den Komparatoren 15 eine Differenzierung des Wechselspannungssignals in ein Rechtecksignal, das in der Steuerung 21 zur Bestimmung der Kettenlängung der Gelenkkette 10 genutzt wird. Über die Differenzierung des Wechselspannungssignals an den Komparatoren 15 kann neben der exakten zeitlichen Zuordnung des Wechsels der die Spulen 6, 6' durchströmenden magnetischen Kreise 13, 14 über die Periodendauer des Rechtecksignals auch die Geschwindigkeit der Gelenkkette 10 bestimmt werden. Dies ermöglicht es, in der Steuerung 21 über den Abstand der Schaltimpulse der beiden Kettensensoren 1 im Verhältnis zur Geschwindigkeit der Gelenkkette 10, bzw. der Periodendauer der Rechtecksignale ein eindeutiges Maß für die Kettenlänge zu berechnen.

Aus einem Vergleich der aktuellen Kettenlängung zur in der Steuerung 21 abgespeicherten ursprünglichen Kettenlänge ergibt sich die aktuelle Kettenlängung der Gelenkkette 10, die kontinuierlich an der Verschleißanzeige 17 angezeigt werden kann und die beim Überschreiten einer vorgegebenen Grenze über die Notfallanzeige 18 eine Warnung ausgeben kann bzw. den Betrieb der Gelenkkette 10 unterbrechen kann. Gleichzeitig kann die Kettenlängung als Steuergröße für die Synchronisation der Kette 10 gegenüber den angetriebenen Komponenten der zugehörigen Maschinen und Industrieanlagen verwendet werden.

Über die von den beiden Kettensensoren 1 an die Energieversorgung 20 übertragene Wechselspannung kann die zum Betrieb der Messvorrichtung notwendige Energie durch die Messvorrichtung selbst bzw. die Kettensensoren 1 selbst erzeugt werden. Entsprechend kann die erfindungsgemäße Vorrichtung zur Messung der Kettenlängung auch generisch eingesetzt werden und bei bestehenden Anlagen nachgerüstet werden, ohne dabei komplexe Veränderungen der bestehenden Anlagen durchführen zu müssen.

### Bezugszeichenliste

- 1: Kettensensor
- 2, 2': Reluktanzsensoren
- 3: Jochkörper
- 4: Mittelschenkel
- 5: Jochschenkel
- 5': linksseitiger Jochschenkel
- 5": rechtsseitiger Jochschenkel
- 6, 6': Spulen
- 7: Innenzahn
- 8: Außenzahn
- 9: Dauermagneten
- 10: Gelenkkette
- 11: Kettengelenke
- 12: Kettenlaschen
- 13: Magnetischer Kreis
- 13': Kurzschlusskreis
- 14: Magnetischer Kreis
- 14': Kurzschlusskreis
- 15: Komparator
- 16: Betriebsanzeige
- 17: Verschleißanzeige
- 18: Notfallanzeige
- 19: Signal- und Energieversorgungsschaltung
- 20: Energieversorgung
- 21: Steuerung

## Patentansprüche

1. Sensor (1) mit mindestens einer Spule (6),
**dadurch gekennzeichnet, dass** mindestens ein erster Reluktanzsensor (2) vorgesehen ist, der erste Reluktanzsensor (2) weist einen magnetisch leitfähigen Jochkörper (3) mit einem Mittelschenkel (4) und zwei sich seitlich dazu erstreckende Jochschenkel (5) auf, die mindestens eine Spule (6) ist auf dem Mittelschenkel (4) angeordnet und jeder Jochschenkel (5) ist mit zwei Zähnen (7,8) versehen, wobei die Zähne (7,8) der Jochschenkel (5) im geringen Abstand zu einer Kette anordbar sind, und mit mindestens zwei Dauermagneten (9) die auf verschiedenen Seiten der mindestens einen Spule (6) angeordnet sind.

2. Sensor nach Anspruch 1,
**dadurch gekennzeichnet, dass** der Sensor als Kettensensor zur Messung der Geschwindigkeit und/oder der relativen Längung einer Gliederkette ausgebildet ist.

3. Kettensensor (1) nach Anspruch 2,
**dadurch gekennzeichnet, dass** die mindestens zwei Dauermagneten (9) auf den äußeren Zähnen (8) der Jochschenkel (5) des ersten Reluktanzsensors (2) angeordnet sind, bevorzugt an den Spitzen der äußeren Zähne (8) angeordnet sind.

4. Kettensensor (1) nach Anspruch 2 oder 3,
**dadurch gekennzeichnet, dass** ein zweiter Reluktanzsensor (2') vorgesehen ist, der zweite Reluktanzsensor (2') weist ebenfalls einen magnetisch leitfähigen Jochkörper (3) mit einem Mittelschenkel (4) und zwei sich seitlich dazu erstreckende Jochschenkel (5) auf, jeder Jochschenkel (5) ist mit zwei der Kette zugewandten Zähnen (7,8) versehen, wobei die Zähne (7,8) im geringen Abstand zur Kette anordbar sind und dem ersten Reluktanzsensor (2) zugewandt sind.

5. Kettensensor (1) nach Anspruch 4,
**dadurch gekennzeichnet, dass** die seitlichen Jochschenkel (5) des ersten und zweiten Reluktanzsensors (2,2') jeweils mit einem Dauermagneten (9) versehen sind, wobei die Dauermagneten (9) jeweils an den äußeren Zähnen (8) der Jochschenkel (5), bevorzugt an deren Spitzen, angeordnet sind, und wobei die Dauermagnete (9) auf den Jochschenkeln (5) des ersten Reluktanzsensors (2) eine gleiche Polrichtung aufweisen und die Dauermagneten (9) auf den Jochschenkeln (5) des zweiten Reluktanzsensors (2') eine umgekehrte Polrichtung aufweisen.

6. Kettensensor (1) nach einem der Ansprüche 2 bis 5 für eine Gelenkkette (10) mit einer gleichmäßigen Teilung zwischen den Kettengelenken (11),
**dadurch gekennzeichnet, dass** der mindestens eine erste Reluktanzsensor (2) senkrecht zur Gelenkachse der Kettengelenke (11) auf einer Seite der Gelenkkette (10) angeordnet ist, wobei die Zähne (7,8) der Jochschenkel (5) des ersten Reluktanzsensors (2) der Gelenkkette (10) zugewandt sind.

7. Kettensensor (1) nach Anspruch 6,
**dadurch gekennzeichnet, dass** ein zweiter Reluktanzsensor (2') vorgesehen ist der senkrecht zur Gelenkachse der Kettengelenke (11) auf einer gegenüberliegenden Seite der Gelenkkette (10) angeordnet ist, wobei die Zähne (7,8) der Jochschenkel (5) des zweiten Reluktanzsensors (2') der Gelenkkette (10) zugewandt sind.

8. Kettensensor (1) nach Anspruch 7,
**dadurch gekennzeichnet, dass** der Abstand der einander zugeordneten Zähne (7,8) der ersten und zweiten Reluktanzsensoren (2,2') maximal 20 %, bevorzugt maximal 10 %, größer ist als der Durchmesser der Kettengelenke (11) der Gelenkkette (10).

9. Kettensensor (1) nach einem der Ansprüche 6 bis 8,
**dadurch gekennzeichnet, dass** der Abstand des äußeren Zahns (8) des einen Jochschenkels (5',5") zum inneren Zahn (7) des anderen Jochschenkels (5',5") des ersten oder zweiten Reluktanzsensors (2,2') im Wesentlichen ein ganzzahliges Vielfaches der Teilung zwischen den Kettengelenken (11) der Gelenkkette (10) beträgt.

10. Vorrichtung zur Messung der Kettenlängung einer Kette mit mindestens zwei Kettensensoren (1) nach einem der Ansprüche 2 bis 9, die in einem Abstand zueinander entlang der Kette (10) angeordnet sind, und die mit einer Steuereinheit (21) zum Aufnehmen und Verarbeiten der Signale der zwei Kettensensoren (1) verbunden sind, **dadurch gekennzeichnet, dass** die an jedem Kettensensor (1) vorgesehene mindestens eine Spule (6) ein Wechselspannungssignal erzeugt.

11. Vorrichtung nach Anspruch 10,
**dadurch gekennzeichnet, dass** mindestens drei Kettensensoren (1) vorgesehen sind.

12. Vorrichtung nach Anspruch 10 oder 11,
**dadurch gekennzeichnet, dass** für jeden Kettensensor (1) ein Komparator zur Umwandlung der Wechselspannungssignale in Rechtecksignale vorgesehen ist.

13. Vorrichtung nach einem der Ansprüche 10 bis 12,
**dadurch gekennzeichnet, dass** die Steuereinheit die Wechselspannungssignale zur Stromversorgung, bevorzugt zur autarken Stromversorgung, der Vorrichtung nutzt.

14. Vorrichtung nach einem der Ansprüche 10 bis 13,
**dadurch gekennzeichnet, dass** eine Anzeigeeinheit zur Darstellung der Kettenlängung der Kette vorgesehen ist.

15. Verfahren zur Messung der Kettenlängung einer Kette mit mindestens zwei Kettensensoren (1), die in einem Abstand zueinander entlang der Kette angeordnet sind, wobei jeder Kettensensor (1) mindestens eine Spule (6) und mindestens zwei Dauermagnete (9) aufweist, mit den Schritten:
- Ausbilden von zwei geschlossenen magnetischen Kreisen (13,14) über jeden Kettensensor (1) mittels der Dauermagneten (9), wobei die mindestens eine Spule (6) wechselweise von einem der geschlossenen magnetischen Kreise (13,14) durchflutet wird, während der jeweils andere geschlossene magnetische Kreise (13,14) im Kurzschluss über den Kettensensor (1) geführt wird;
- Bewegen der Kette (10) in einer Richtung entlang der Kettensensoren (1);
- periodischer Wechsel der die mindestens eine Spule (6) durchflutenden magnetischen Kreise (13,14);
- Erzeugen einer Wechselspannung an den Spulen (6) der Kettensensoren (1).

16. Verfahren nach Anspruch 15, weiter umfassend die Schritte:
- Differenzieren der Wechselspannungen der Spulen (6) und Erzeugen eines separaten Rechtecksignals für beide Kettensensoren (1) ;
- Bestimmen der Periodendauer der Rechtecksignale der Kettensensoren (1).

17. Verfahren nach Anspruch 15, weiter umfassend die Schritte:
- Bestimmen des zeitlichen Abstands der Schaltschwellen der Rechtecksignale der beiden Kettensensoren (1) ;
- Berechnen eines Schaltverhältnisses aus dem zeitlichen Abstand der Schaltschwellen in Verhältnis zur Periodendauer der Rechtecksignale;
- Vergleichen des berechneten Schaltverhältnisses mit einem gespeicherten Schaltverhältnis für einen Ausgangszustand der Kette, wobei dieser Vergleichswert ein Maß für die relative Kettenlängung ist.

## Claims

1. A sensor (1) comprising at least one coil (6),
**characterized in that** at least one first reluctance sensor (2) is provided, said first reluctance sensor (2) having a magnetically conductive yoke body (3) comprising a central leg (4) and two yoke legs (5) extending laterally thereto, the at least one coil (6) is arranged on the central leg (4), the yoke legs (5) are each provided with two teeth (7, 8), said teeth (7, 8) of the yoke legs (5) being adapted to be arranged in closely spaced relationship with a chain, and at least two permanent magnets (9), which are arranged on different sides of the at least one coil (6).

2. The sensor according to claim 1,
**characterized in that** the sensor is a chain sensor suitable for measuring the speed and/or the relative elongation of a link chain.

3. The chain sensor (1) according to claim 2,
**characterized in that** the at least two permanent magnets (9) are arranged on the outer teeth (8) of the yoke legs (5) of the first reluctance sensor (2), preferably arranged on the tips of the outer teeth (8).

4. The chain sensor (1) according to one of the claims 2 or 3,
**characterized in that** a second reluctance sensor (2') is provided, said second reluctance sensor (2') also has a magnetically conductive yoke body (3) comprising a central leg (4) and two yoke legs (5) extending laterally thereto, each yoke leg (5) is provided with two teeth (7, 8) facing the chain, said teeth (7, 8) being adapted to be arranged in closely spaced relationship with the chain and facing the first reluctance sensor (2).

5. The chain sensor (1) according to claim 4,
**characterized in that** the lateral yoke legs (5) of the first and second reluctance sensors (2, 2') are each provided with a permanent magnet (9), the permanent magnets (9) being preferably arranged on the respective outer teeth (8) of the yoke legs (5), preferably on their tips and the permanent magnets (9) on the yoke legs (5) of the first reluctance sensor (2) have an identical pole direction, whereas the permanent magnets (9) on the yoke legs (5) of the second reluctance sensor (2') have an inverse pole direction.

6. The chain sensor (1) according to one of the claims 2 to 5 for an articulated chain (10) with a uniform pitch between the chain hinges (11),
**characterized in that** the at least one first reluctance sensor (2) is arranged perpendicularly to the hinge axes of the chain hinges (11) on one side of the articulated chain (10), the teeth (7, 8) of the yoke legs (5) of the first reluctance sensor (2) facing the articulated chain (10).

7. The chain sensor (1) according to claim 6,
**characterized in that** a second reluctance sensor (2') is provided, which is arranged perpendicularly to the hinge axes of the chain hinges (11) on an opposite side of the articulated chain (10), the teeth (7, 8) of the yoke legs (5) of the second reluctance sensor (2') facing the articulated chain (10).

8. The chain sensor (1) according to claim 7,
**characterized in that** the distance between the associated teeth (7, 8) of the first and second reluctance sensors (2, 2') is at most 20 %, preferably at most 10 %, larger than the diameter of the chain hinges (11) of the articulated chain (10).

9. The chain sensor (1) according to one of the claims 6 to 8,
**characterized in that** the distance between the outer tooth (8) of one of the yoke legs (5', 5") and the inner tooth (7) of the other yoke leg (5', 5") of the first or second reluctance sensor (2, 2') amounts substantially to an integer multiple of the pitch between the chain hinges (11) of the articulated chain (10).

10. A device for measuring the chain elongation of a chain with at least two chain sensors (1) according to one of the claims 2 to 19, said chain sensors (1) being arranged along the chain (10) in spaced relationship with one another and connected to a control unit (21) for receiving and processing the signals of the two chain sensors (1), **characterized in that** the at least one coil (6) provided on each chain sensor (1) generates an alternating voltage signal.

11. The device according to claim 10,
**characterized in that** the at least three chain sensors (1) are provided.

12. The device according to claim 10 or 11,
**characterized in that** a comparator for converting the alternating voltage signals into square-wave signals can be provided for each chain sensor (1).

13. The device according to one of the claims 10 to 12,
**characterized in that** the control unit utilizes the alternating voltage signals for power supply, preferably for an autarkic power supply of the device.

14. The device according to one of the claims 10 to 13,
**characterized in that** an indicator device is provided for displaying the chain elongation of the chain.

15. A method for measuring the chain elongation of a chain with at least two chain sensors (1) which are arranged along the chain in spaced relationship with one another, wherein each chain sensor (1) comprising at least one coil (6) and at least two permanent magnets (9), said method comprising the steps:
- forming two closed magnetic circuits (13, 14) via each chain sensor (1) by means of the permanent magnets (9), one of the closed magnetic circuits (13, 14) flowing alternately through the at least one coil (6), whereas the respective other closed magnetic circuit (13, 14) is conducted via the chain sensor (1) in short-circuit state;
- moving the chain (10) in a direction along the chain sensors (1);
- periodically changing the magnetic circuits (13, 14) flowing through the at least one coil (6);
- generating an AC voltage at the coils (6) of the chain sensors (1).

16. The method according to claim 15, further comprising the steps:
- differentiating the AC voltage at the coils (6) and generating a separate square-wave signal for both chain sensors (1);
- determining the period of the square-wave signals of the chain sensors (1).

17. The method according to claim 15, further comprising the steps:
- determining the intervals in time between the switching signals of the respective square-wave signals of both chain sensors (1);
- Calculating a switching ration on the basis of the interval in time of the switching thresholds in relation to the period of the square-wave signals.
- comparing the calculated switching ratio with a stored switching ratio for an initial condition of the chain, this comparison value being a measure for the relative chain elongation.

## Revendications

1. Capteur (1) comprenant au moins une bobine (6), **caractérisé en ce qu'**il est prévu au moins un premier capteur à réluctance (2), **en ce que** le premier capteur à réluctance (2) présente un corps de culasse (3) à conduction magnétique avec une branche centrale (4) et deux branches de culasse (5) s'étendant latéralement à la branche centrale, **en ce que** ladite au moins une bobine (6) est agencée sur la branche centrale (4) et chaque branche de culasse (5) est pourvue de deux dents (7, 8), les dents (7, 8) des branches de culasse (5) pouvant être agencées à faible distance d'une chaine, et **en ce qu'**il comprend au moins deux aimants permanents (9), qui sont agencés sur des côtés différents de ladite au moins une bobine (6).

2. Capteur selon la revendication 1,
**caractérisé en ce que** le capteur est réalisé en tant que capteur pour chaine destiné à mesurer la vitesse et/ou l'allongement relatif d'une chaine à maillons.

3. Capteur pour chaine (1) selon la revendication 2,
**caractérisé en ce que** lesdits au moins deux aimants permanents (9) sont agencés sur les dents extérieures (8) des branches de culasse (5) du premier capteur à réluctance (2), de préférence au niveau des sommets des dents extérieures (8).

4. Capteur pour chaine (1) selon la revendication 2 ou la revendication 3,
**caractérisé en ce qu'**il est prévu un deuxième capteur à réluctance (2'), et **en ce que** le deuxième capteur à réluctance (2') présente également un corps de culasse (3) à conduction magnétique avec une branche centrale (4) et deux branches de culasse (5) s'étendant latéralement à la branche centrale, et chaque branche de culasse (5) est pourvue de deux dents (7, 8) dirigées vers la chaine, les dents (7, 8) pouvant être agencées à faible distance de la chaine et étant dirigées vers le premier capteur à réluctance (2).

5. Capteur pour chaine (1) selon la revendication 4,
**caractérisé en ce que** les branches de culasse (5) latérales du premier et du deuxième capteur à réluctance (2, 2') sont pourvues chacune respectivement d'un aimant permanent (9), les aimants permanents (9) étant agencés respectivement sur les dents extérieures (8) des branches de culasse (5), de préférence sur leurs sommets, et les aimants permanents (9) sur les branches de culasse (5) du premier capteur à réluctance (2) présentant une même direction polaire, et les aimants permanents (9) sur les branches de culasse (5) du deuxième capteur à réluctance (2') présentant une direction polaire inverse.

6. Capteur pour chaine (1) selon l'une des revendications 2 à 5, destiné à une chaine articulée (10) avec un pas régulier entre les articulations de chaine (11),
**caractérisé en ce que** ledit au moins un premier capteur à réluctance (2) est agencé perpendiculairement à l'axe d'articulation des articulations de chaine (11), sur un côté de la chaine articulée (10), les dents (7, 8) des branches de culasse (5) du premier capteur à réluctance (2) étant dirigées vers la chaine articulée (10).

7. Capteur pour chaine (1) selon la revendication 6,
**caractérisé en ce qu'**il est prévu un deuxième capteur à réluctance (2'), qui est agencé perpendiculairement à l'axe d'articulation des articulations de chaine (11), sur un côté opposé de la chaine articulée (10), les dents (7, 8) des branches de culasse (5) du deuxième capteur à réluctance (2') étant dirigées vers la chaine articulée (10).

8. Capteur pour chaine (1) selon la revendication 7,
**caractérisé en ce que** la distance d'espacement entre les dents (7, 8) mutuellement associées du premier et du deuxième capteur à réluctance (2, 2') est au maximum 20% plus grande, de préférence au maximum 10% plus grande que le diamètre des articulations de chaine (11) de la chaine articulée (10).

9. Capteur pour chaine (1) selon l'une des revendications 6 à 8,
**caractérisé en ce que** la distance de la dent extérieure (8) de l'une des branches de culasse (5', 5") à la dent intérieure (7) de l'autre branche de culasse (5', 5'') du premier ou du deuxième capteur à réluctance (2, 2') est sensiblement égale à un multiple entier du pas entre les articulations de chaine (11) de la chaine articulée (10).

10. Dispositif pour mesurer l'allongement de chaine d'une chaine à l'aide d'au moins deux capteurs pour chaine (1) selon l'une des revendications 2 à 9, qui sont agencés à une distance l'un de l'autre le long de la chaine (10), et qui sont reliés à une unité de commande (21) pour relever et traiter les signaux des deux capteurs pour chaine (1),
**caractérisé en ce que** ladite au moins une bobine (6) prévue sur chaque capteur pour chaine (1) produit un signal alternatif.

11. Dispositif selon la revendication 10, **caractérisé en ce que** sont prévus au moins trois capteurs pour chaine (1).

12. Dispositif selon la revendication 10 ou la revendication 11,
**caractérisé en ce que** pour chaque capteur pour chaine (1), il est prévu un comparateur pour convertir les signaux de tension alternative en signaux rectangulaires.

13. Dispositif selon l'une des revendications 10 à 12,
**caractérisé en ce que** l'unité de commande utilise les signaux de tension alternative pour l'alimentation en courant, de préférence pour l'alimentation en courant autarcique.

14. Dispositif selon l'une des revendications 10 à 13,
**caractérisé en ce qu'**il est prévu une unité de visualisation pour représenter l'allongement de chaine de la chaine considérée.

15. Procédé pour mesurer l'allongement de chaine d'une chaine à l'aide d'au moins deux capteurs pour chaine (1), qui sont agencés à distance l'un de l'autre le long de la chaine, chaque capteur pour chaine (1) comprenant au moins une bobine (6) et au moins deux aimants permanents (9), le procédé comprenant les étapes suivantes :
- formation de deux circuits magnétiques fermés (13, 14) par l'intermédiaire de chaque capteur pour chaine (1) au moyen des aimants permanents (9), ladite au moins une bobine (6) étant traversée alternativement par le flux de l'un des circuits magnétiques fermés (13, 14), tandis que l'autre respectif des circuits magnétiques fermés (13, 14) est mené en court-circuit par l'intermédiaire du capteur pour chaine (1) ;
- déplacement de la chaine (10) dans une direction le long des capteurs pour chaine (1) ;
- alternance périodique des circuits magnétiques (13, 14) dont le flux traverse ladite au moins une bobine (6) ;
- production d'une tension alternative au niveau des bobines (6) des capteurs pour chaine (1).

16. Procédé selon la revendication 15, comprenant par ailleurs les étapes suivantes :
- différenciation des tensions alternatives des bobines (6) et production d'un signal rectangulaire séparé pour les deux capteurs pour chaine (1) ;
- détermination de la durée de période des signaux rectangulaires des capteurs pour chaine (1).

17. Procédé selon la revendication 15, comprenant, par ailleurs, les étapes suivantes :
- détermination de l'intervalle de temps entre les seuils de commutation des signaux rectangulaires des deux capteurs pour chaine (1) ;
- calcul d'un rapport de commutation à partir de l'intervalle de temps entre les seuils de commutation par rapport à la durée de période des signaux rectangulaires ;
- comparaison du rapport de commutation avec un rapport de commutation mémorisé pour un état initial de la chaine, cette valeur de comparaison étant une mesure pour l'allongement relatif de chaine.
